# FASCICULE DE BREVET EUROPEEN

(11) **EP 2 900 498 B1**
(45) Date de publication et mention de la délivrance du brevet: **08.11.2017**
(21) Numéro de dépôt: 13789607.2
(22) Date de dépôt: 17.09.2013
(51) Int. Cl.: B60J 5/04

(54) **HABILLAGE INTÉRIEUR STRUCTUREL POUR PORTE LATÉRALE DE VÉHICULE ET PORTE LATÉRALE AINSI ÉQUIPÉE**
STRUKTURELLES VERKLEIDUNGSTEIL EINER KRAFTFAHRZEUGSEITENTÜR UND SEITENTÜR DAMIT
INNER STRUCTURAL FINISH FOR VEHICLE SIDE DOOR, AND SIDE DOOR THUS EQUIPPED

(30) Priorité: 25.09.2012 FR 1258989
(43) Date de publication de la demande: 05.08.2015
(73) Titulaire: Renault S.A.S., 92100 Boulogne-Billancourt (FR)
(72) Inventeur: BEZEAULT, Loic, F-78000 Versailles (FR); LEROOY, Jean-Francois, F-92420 Vaucresson (FR); DUHEM, Xavier, F-92130 Issy Les Moulineaux (FR)
(86) Numéro de dépôt international: PCT/FR2013/052131
(87) Numéro de publication internationale: WO 2014/049227

(56) Documents cités:
- WO-A1-2010/125264
- JP-A- 2008 105 437
- US-A- 5 505 024

## Description

La présente invention concerne une porte latérale de véhicule automobile et sa partie d'habillage intérieur.

Dans la conception classique, telle qu'illustrée par exemple sur la figure 3 du document WO2010/125264 au nom du Demandeur, la porte latérale est composée d'une structure en tôle (acier et aluminium) et elle est complétée d'une part du côté extérieur du véhicule par une peau extérieure et du côté intérieur par une ou des pièces d'habillage intérieur en plastique. En particulier, la zone supérieure d'une porte latérale avant est composée d'une partie structurelle en tôle puis d'un habillage intérieur de porte en composite (plastique) en une ou plusieurs parties. La structure en tôle est composée d'un caisson de porte, d'un bandeau de porte en acier et de l'assemblage du bandeau sur le caisson (soudure par point et/ou rivetage et/ou collage).

L'ensemble est structurel pour tenir les prestations de chocs : frontal et latéral. En termes de caractéristique, le bandeau de porte doit tenir en flambage et compression sous un effort longitudinal 5000 daN (le sens « longitudinal » se réfère à l'axe longitudinal du véhicule). C'est pourquoi le bandeau est en tôle d'acier : elle est réalisée en profilage et forme un corps creux dont l'inertie résultante est importante pour la tenue. Sa masse est relativement grande.

L'habillage intérieur n'a pas de fonction de structure mais seulement une fonction d'aspect pour le client. L'assemblage de cet habillage se fait sur le caisson par vis et/ou par clips.

Dans le but d'alléger le poids d'un véhicule, on cherche à remplacer les pièces d'acier par des pièces en matériau plus léger tel que l'aluminium ou des matières plastiques composites. Mais il faut que ce remplacement ne se fasse pas au détriment de la résistance aux impacts, notamment à la compression longitudinale et au flambage.

La figure 2 du document JP2008-105437 divulgue une porte avec une zone supérieure renforcée. Ce document est considéré comme l'art antérieur le plus proche. Le but de l'invention est de proposer une nouvelle structure de porte ou de partie de porte qui conduise à un allégement important mais conserve voire améliore la résistance à la compression et au flambage.

L'invention atteint son but grâce à un habillage composite pour former la peau intérieure d'une porte latérale de véhicule au niveau d'un dessous de baie, sous forme d'une première feuille comprenant une partie principale sensiblement verticale raccordée à une partie supérieure oblique de retour sous baie, réalisée en plastique composite moulé, l'habillage étant rendu structurel par un renfort de bandeau sous forme d'une seconde feuille comportant au moins deux parties formant un angle entre elles et solidarisée à la première feuille de manière à former avec celle-ci un corps creux assurant une résistance aux efforts de compression longitudinaux, caractérisé en ce que la première feuille constituant l'habillage intérieur comporte sous la partie de retour sur baie une nervure en forme d'arête rectiligne faisant saillie de la surface extérieure de la partie principale verticale.

Ainsi, selon l'invention cette nervure est destinée à résister aux efforts de compression, mais aussi à participer efficacement à la structure du corps creux comme on va le voir.

Par ailleurs, on fait jouer à l'habillage, jusque là purement esthétique, un rôle également structurel dans la résistance aux efforts de compression longitudinaux, en le munissant d'un corps creux. Le fait de prévoir le corps creux sur la partie d'habillage fait qu'en pratique, on peut l'établir dans des dimensions supérieures au corps creux prévu sur un bandeau de porte en acier, prévu dans l'ossature. Les dimensions supérieures du corps creux améliorent son inertie et donc sa résistance. Naturellement, pour donner cette fonction structurelle à l'habillage, il faut en adapter la géométrie et le process de montage, par exemple selon les principes qui vont suivre.

Avantageusement, pour jouer ce rôle de corps creux résistant, les deux parties du renfort de bandeau forment un angle définissant une arête longitudinale rectiligne. Ce sont en effet les arêtes rectilignes qui fournissent la meilleure résistance à la compression longitudinale.

De préférence, le renfort de bandeau comporte trois parties planes ou sensiblement planes formant entre elles deux arêtes longitudinales rectilignes.

Avantageusement, la seconde feuille constituant le renfort de bandeau est en plastique composite à base de résine et de charges. De préférence, la première et la seconde feuille sont en plastique composite à base de résine polyamide et de fibres de verre, avec un taux de 40% à 70% en poids, on en matières offrant des résistances analogues.

De même, ladite nervure en forme d'arête rectiligne est avantageusement renforcée par des cloisons en équerre formée entre ladite nervure et ladite surface extérieure de la partie principale verticale de l'habillage. Ces équerres sont de préférence sous forme de croisillons, par exemple quatre croisillons. Non seulement, elles soutiennent la nervure en forme d'arête, mais elles contribuent à rigidifier la partie de retour de l'habillage.

Comme évoqué plus haut, la nervure en forme d'arête forme, après assemblage du corps creux défini par l'habillage et le renfort de bandeau, une cloison structurelle transversale dudit corps creux. Elle lui est en effet assemblée par soudure ou collage ou tout autre moyen.

De préférence, le corps creux est assemblé par trois lignes de soudure (ou d'un autre moyen de solidarisation) au niveau des parties supérieure et inférieure de la feuille formant le renfort de bandeau et au niveau de la nervure en forme d'arête.

Il est intéressant de prévoir sur la feuille formant le renfort de bandeau, au niveau de la nervure en forme d'arête de l'habillage, un relief de positionnement coopérant avec ladite nervure. Ce relief sert de butée à la nervure en forme d'arête et facilite par ailleurs la soudure en offrant plus de surface de contact ou de soudage. Le relief de positionnement est par exemple constitué lui-même par au moins une nervure, continue ou non, voire de deux nervures parallèles entre lesquelles vient se placer la crête de la nervure en forme d'arête de l'habillage.

L'invention concerne aussi une porte latérale de véhicule automobile, du type comprenant une ossature définissant une baie, et un habillage composite pour former la peau intérieure de la porte au niveau d'un dessous de baie, caractérisée en ce que l'habillage intérieur présente les une ou les autres des caractéristiques énoncées ci-dessus.

Dans la porte de l'invention, le corps creux de l'habillage constitue le corps creux principal de la porte pour résister aux efforts longitudinaux. Autrement dit, l'ossature de la porte n'a plus le corps creux d'acier prévu au niveau du bandeau de porte.

D'autres caractéristiques et avantages de l'invention ressortiront de la description suivante d'un exemple de réalisation. Il sera fait référence aux dessins annexés sur lesquels :
La figure 1 est une vue schématique de l'ossature en aluminium d'une porte latérale de l'invention.
La figure 2 est une vue schématique de l'habillage intérieur composite de porte latérale qui vient revêtir l'ossature de la figure 1.
La figure 3 est une coupe III-III de la porte de la figure 2, au niveau du bandeau de porte sous baie.
La figure 4 est une coupe IV-IV de la porte de la figure 2, au niveau du bandeau de porte sous baie.
La figure 5 est une vue en perspective de la face de l'habillage intérieur tournée vers l'ossature de porte, au niveau du bandeau de porte sous baie.
La figure 6 est une vue en perspective de côté du renfort de bandeau de porte sous baie, associé à l'habillage intérieur.
La figure 7 est une vue de côté du renfort de la figure 6.
La figure 8 est une vue analogue aux figures 3 ou 4 et à même échelle d'une structure de porte latérale de l'état de la technique.

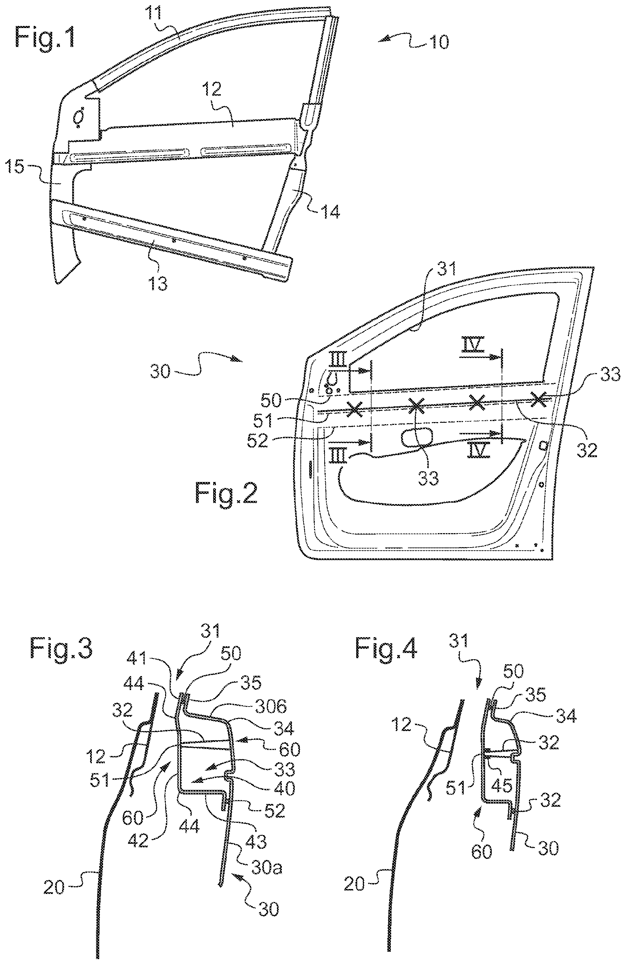

La figure 1 représente une ossature 10 de porte latérale en aluminium, comportant un renfort de cadre 11 définissant une baie, un renfort de ceinture 12 définissant une zone de bandeau sous baie, un renfort anti-intrusion oblique 13, un renfort 14 de partie arrière du caisson et un renfort 15 de partie avant de caisson, toutes ces parties étant réalisées en aluminium ou autre matière résistante relativement légère. Cette ossature d'aluminium 10 est destinée à recevoir du côté extérieur du véhicule une peau extérieure 20 de porte latérale et du côté intérieur un habillage intérieur de porte latérale 30 (figure 3).

La peau extérieure 20 est en plusieurs parties : une partie supérieure pour suivre la partie supérieure du cadre de porte 11 autour de la baie de porte, et une partie inférieure formant panneau extérieur pour couvrir le bas de la porte, sous la baie : cette partie inférieure, fixée au renfort de ceinture 12, est représentée sur les figures 3 et 4.

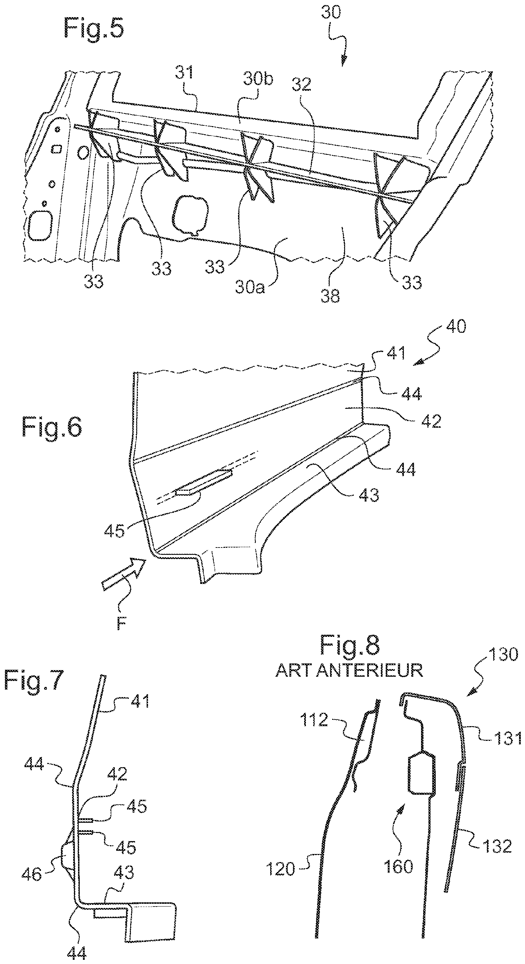

L'habillage intérieur 30 est réalisé en composite. Il a une forme générale de porte et définit une ouverture de baie 31 au niveau d'un cadre supérieur et comporte un panneau inférieur pourvu d'ouvertures pour l'installation de divers dispositifs tels que le vide-poche ou le lève-vitre. La partie inférieur de l'habillage 30 est sous forme d'une feuille de plastique composite comprenant une partie principale sensiblement verticale 30a, raccordée par un épaulement arrondi 34 à une partie supérieure oblique ou horizontale 30b de retour sous baie. La zone sous baie de l'habillage, qu'on appelle aussi dans ce texte la zone de bandeau, comporte sur sa face tournée vers l'ossature un ensemble de reliefs constitué d'une nervure en forme d'arête longitudinale 32 renforcée par quatre (par exemple) croisillons 33 qui sont représentés plus en détail sur la figure 5. L'arête centrale 32 est dans la zone de bandeau ; rectiligne et horizontale, elle fait saillie perpendiculairement par rapport à la surface extérieure 38 (extérieure par rapport à l'habitacle, et tournée vers l'ossature). L'arête 32 est légèrement plus épaisse à son pied qu'à sa crête. Cette arête 32 est placée sous la partie de retour 30b qui ramène l'habillage 30 vers la baie 31 occupée par une vitre non représentée, c'est-à-dire au niveau d'un joint lécheur disposé sur une feuillure 35 de bordure de baie. L'arête 32 fait sensiblement toute la largeur de la porte. La dimension horizontale de l'arête 32 dans le plan de la figure 3 est sensiblement celle de la projection horizontale de la partie de retour 30b. L'arête 32 est renforcée par les quatre croisillons 33 formés chacun de quatre cloisons en forme de goussets ou d'équerres qui prennent appui à la fois sur l'arête 32 et sur la surface 38 de l'habillage. Deux des croisillons sont placés à l'avant et à l'arrière de la porte, et les deux autres sont répartis de manière équidistante sur l'arête 32. Les croisillons jouent un rôle dans la résistance à la compression et dans le maintien de l'arête 32 ; d'autre part, ils confèrent une certaine raideur à la zone de retour sous baie 30b de l'habillage, entre l'épaulement arrondi 34 et la feuillure 35 du joint lécheur, ce qui assure un bon fonctionnement du joint lécheur sur la vitre, et permet d'offrir une résistance à l'appui éventuel d'un coude du passager ou du conducteur sur l'habillage au niveau de l'épaulement 34. Cet ensemble de reliefs est moulé par injection en même temps que l'ensemble de l'habillage 30, dans une matière composite à matrice plastique, notamment polyamide, chargée de fibres, notamment de fibres de verre. Dans un exemple de réalisation, on utilise du polyamide PA66 et des fibres de verre pour 50% en poids de la matière composite. L'épaisseur moyenne de base de l'habillage 30, au niveau de la feuille constituant les parties 30a et 30b, est d'environ 3 mm, mais l'épaisseur de l'arête 32 est de préférence un peu supérieure.

La zone de bandeau de l'habillage intérieur coopère avec un renfort de bandeau composite 40 longitudinal, détaillé sur les figures 6 et 7. Celui-ci est formé essentiellement de trois surfaces planes 41, 42, 43 formant entre elles deux arêtes ou carres 44 rectilignes et dans le sens longitudinal de la porte (et du véhicule). Les deux surfaces inférieures 42, 43 forment sensiblement un L et les surfaces 41, 42 forment un angle obtus. Les deux carres rectilignes 44 donnent à la pièce 40 une grande résistance à la compression dans le sens longitudinal indiqué par la flèche F de la figure 6. La surface 42 comporte à l'arrière un ou plusieurs bossages 46 destinés à la fixation d'équipement tels que le lève-vitre. La surface horizontale 43 a, dans le plan des figures 3, 4 ou 7, sensiblement la même dimension que l'arête 32 et le retour 30b.

Le renfort de bandeau 40 est moulé dans une matière composite à matrice plastique, notamment polyamide, chargée de fibres, notamment de fibres de verre. Dans un exemple de réalisation, on utilise du polyamide PA66 et des fibres de verre pour 60% en poids de la matière composite. L'épaisseur de la feuille formant la pièce 40 est d'environ 3,5 mm.

L'assemblage entre le renfort de bandeau 40 et l'habillage structurel 30 pour former un caisson ou corps creux 60 (figure 4) se fait avantageusement par soudage laser (ou par collage) le long de trois lignes de soudure (ou de collage) horizontales 50, 51, 52 représentées en tirets sur la figure 2. Les lignes supérieure 50 et inférieure 52 assemblent l'une contre l'autre les feuillures adjacentes des pièces 30 et 40, par exemple la feuillure supérieure 35 contre la feuillure 41.

L'assemblage par soudage laser ou par collage de la crête de l'arête 32 avec la surface 42 peut être facilité et amélioré en prévoyant sur la surface 42 du renfort de bandeau 40, du côté tourné vers l'habillage intérieur 30, un relief 45 destiné à positionner géométriquement le renfort 40 sur l'arête 32 de l'habillage structurel 30. Ce relief 45 peut prendre la forme d'une baguette ou nervure (on a représenté un tronçon de nervure sur la figure 6) ou deux nervures (comme on l'a représenté sur les figures 4 et 7) contre laquelle ou entre lesquelles vient se positionner la crête de l'arête 32. Les nervures 45 peuvent être discontinues, mais plus avantageusement, elles s'étendent continûment sur toute la porte et ainsi facilitent et renforcent le collage ou la soudure laser 51.

Ainsi, après assemblage, le corps creux formé 60 entre les pièces soudées ou collées 40 et 30, au niveau du bandeau, est fortement augmenté par rapport au corps creux formé habituellement par le bandeau d'acier d'une porte traditionnelle représentée en section sur la figure 8 à la même échelle que les figures 3 et 4. On reconnaît sur cette figure un panneau extérieur 120 fixé à un renfort de ceinture 112 et un habillage intérieur 130 fait d'une partie supérieure 131 et d'une partie inférieure 132, lequel habillage 130 ne joue aucun rôle structurel. En effet, la partie supérieure 131 de l'habillage 130 prend appui sur le caisson de porte, lequel est renforcé par un bandeau d'acier qui forme un profil creux 160 notablement plus petit que le profil creux 60 de l'invention intégré avec l'habillage intérieur. La section supérieure du profil creux 60 selon l'invention a des effets positifs sur l'inertie et donc sur la tenue en flambage. La structure conforme à l'invention tient bien aux efforts de compression et de flambage, jusqu'à un niveau d'effort d'environ 5000 daN.

L'habillage 30 de l'invention est assemblé à l'ossature 10 de la porte par des techniques et moyens traditionnels, notamment par clipsage, vissage et collage.

La porte de l'invention conserve avec son habillage 30 une esthétique agréable mais est plus légère du fait de la suppression du bandeau d'acier à corps creux de l'ossature, ce rôle de résistance aux efforts de compression étant maintenant assuré par l'habillage lui-même.

## Revendications

1. Habillage composite (30) pour former la peau intérieure d'une porte latérale de véhicule au niveau d'un dessous de baie (31), sous forme d'une première feuille comprenant une partie principale (30a) sensiblement verticale raccordée à une partie supérieure (30b) oblique de retour sur baie, réalisée en plastique composite moulé, l'habillage (30) étant rendu structurel par un renfort de bandeau (40) sous forme d'une seconde feuille comportant au moins deux parties (41, 42, 43) formant un angle entre elles et solidarisées à la première feuille de manière à former avec celle-ci un corps creux (60) assurant une résistance aux efforts de compression longitudinaux, **caractérisé en ce que** la première feuille comporte sous la partie de retour sur baie (30b) une nervure (32) en forme d'arête rectiligne faisant saillie de la surface extérieure (38) de la partie principale verticale (30a).

2. Habillage selon la revendication 1, **caractérisé en ce que** les deux parties (41, 42, 43) forment un angle définissant une arête longitudinale rectiligne (44).

3. Habillage selon la revendication 1, **caractérisé en ce que** le renfort de bandeau (40) comporte trois parties planes (41, 42, 43) formant entre elles deux arêtes longitudinales rectilignes (44).

4. Habillage selon l'une quelconque des revendications précédentes, **caractérisé en ce que** la seconde feuille est en plastique composite à base de résine et de charges.

5. Habillage selon l'une quelconque des revendications précédentes, **caractérisé en ce que** la première et la seconde feuilles sont en plastique composite à base de résine polyamide et de fibres de verre, avec un taux de 40% à 70% en poids.

6. Habillage selon l'une quelconque des revendications 1 à 5, **caractérisé en ce que** ladite nervure (32) en forme d'arête rectiligne est renforcée par des cloisons (33) en équerre formée entre ladite nervure et ladite surface extérieure (38) de la partie principale verticale (30a).

7. Habillage selon la revendication 6, **caractérisé en ce que** lesdites équerres (33) sont sous forme de croisillons.

8. Habillage selon l'une quelconque des revendications 1 à 7, **caractérisé en ce que** la nervure (32) en forme d'arête forme, après assemblage du corps creux (60) défini par l'habillage (30) et le renfort de bandeau (40), une cloison structurelle transversale dudit corps creux (60).

9. Habillage selon la revendication 8, **caractérisé en ce que** le corps creux (60) est assemblé par trois lignes de soudure ou de collage (50, 51, 52) au niveau des parties supérieure et inférieure de la feuille formant le renfort de bandeau (40) et au niveau de la nervure (32) en forme d'arête.

10. Habillage selon l'une quelconque des revendications 1 à 9, **caractérisé en ce que** la feuille formant le renfort de bandeau (40) comporte au niveau de la nervure (32) en forme d'arête de l'habillage, un relief (45) de positionnement coopérant avec ladite nervure (32).

11. Habillage selon la revendication 10, **caractérisé en ce que** le relief (45) de positionnement est constitué lui-même par au moins une nervure.

12. Porte latérale de véhicule automobile, du type comprenant une ossature (10) définissant une baie, et un habillage (30) composite pour former la peau intérieure de la porte au niveau d'un dessous de baie, **caractérisée en ce que** l'habillage (30) est conforme à l'une quelconque des revendications 1 à 11.

13. Porte selon la revendication 12, **caractérisée en ce que** le corps creux (60) de l'habillage constitue le corps creux principal de la porte pour résister aux efforts longitudinaux.

## Patentansprüche

1. Verbundverkleidung (30) zum Ausbilden der Innenhaut einer Fahrzeugseitentür an einer Unterseite einer Fensteröffnung (31), in Form einer ersten Platte, die einen im Wesentlichen vertikalen Hauptteil (30a) umfasst, der sich an einen zur Fensteröffnung zurückgeführten schrägen oberen Teil (30b) anschließt, der aus geformtem Verbundkunststoff hergestellt ist, wobei die Verkleidung (30) zu einem tragenden Teil durch eine Bandverstärkung (40) in Form einer zweiten Platte ausgebildet ist, die wenigstens zwei Teile (41, 42, 43) aufweist, die einen Winkel miteinander bilden und mit der ersten Platte fest verbunden sind, derart, dass sie mit dieser einen Hohlkörper (60) bilden, der einen Widerstand gegen die Druckbeanspruchungen in Längsrichtung sicherstellt, **dadurch gekennzeichnet, dass** die erste Platte unter dem zur Fensteröffnung zurückführenden Teil (30b) eine Rippe (32) in Form eines geraden Steges aufweist, der von der Außenseite (38) des vertikalen Hauptteils (30a) aus vorsteht.

2. Verkleidung nach Anspruch 1, **dadurch gekennzeichnet, dass** die zwei Teile (41, 42, 43) einen Winkel bilden, der eine gerade Längskante (44) definiert.

3. Verkleidung nach Anspruch 1, **dadurch gekennzeichnet, dass** die Bandverstärkung (40) drei ebene Teile (41, 42, 43) aufweist, die zwei gerade Längskanten (44) miteinander bilden.

4. Verkleidung nach einem der vorhergehenden Ansprüche, **dadurch gekennzeichnet, dass** die zweite Platte aus Verbundkunststoff auf der Basis von Harz und Füllstoffen hergestellt ist.

5. Verkleidung nach einem der vorhergehenden Ansprüche, **dadurch gekennzeichnet, dass** die erste und die zweite Platte aus Verbundkunststoff auf der Basis von Polyamidharz und Glasfasern mit einem Gewichtsanteil von 40 % bis 70 % hergestellt sind.

6. Verkleidung nach einem der Ansprüche 1 bis 5, **dadurch gekennzeichnet, dass** die Rippe (32) in Form eines geraden Steges durch winkelförmige Trennwände (33) in dem zwischen der Rippe und der Außenseite (38) des vertikalen Hauptteils (30a) gebildeten Winkel verstärkt ist.

7. Verkleidung nach Anspruch 6, **dadurch gekennzeichnet, dass** die winkelförmigen Teile (33) die Form von Sprossen haben.

8. Verkleidung nach einem der Ansprüche 1 bis 7, **dadurch gekennzeichnet, dass** die stegförmige Rippe (32) nach dem Zusammenbau des Hohlkörpers (60), der durch die Verkleidung (30) und die Bandverstärkung (40) definiert ist, eine quer verlaufende strukturelle Trennwand des Hohlkörpers (60) bildet.

9. Verkleidung nach Anspruch 8, **dadurch gekennzeichnet, dass** der Hohlkörper (60) durch drei Schweiß- oder Klebenähte (50, 51, 52) auf der Höhe des oberen und unteren Teils der Platte, welche die Bandverstärkung (40) bildet, und auf der Höhe der stegförmigen Rippe (32) zusammengebaut ist.

10. Verkleidung nach einem der Ansprüche 1 bis 9, **dadurch gekennzeichnet, dass** die Platte, welche die Bandverstärkung (40) bildet, auf der Höhe der stegförmigen Rippe (32) der Verkleidung ein Positionierungsrelief (45) aufweist, das mit der Rippe (32) zusammenwirkt.

11. Verkleidung nach Anspruch 10, **dadurch gekennzeichnet, dass** das Positionierungsrelief (45) selbst von wenigstens einer Rippe gebildet wird.

12. Kraftfahrzeugseitentür des Typs, welcher ein Gerippe (10), das eine Fensteröffnung definiert, und eine Verbundverkleidung (30) zum Ausbilden der Innenhaut der Tür auf der Höhe einer Unterseite der Fensteröffnung aufweist, **dadurch gekennzeichnet, dass** die Verkleidung (30) eine Verkleidung nach einem der Ansprüche 1 bis 11 ist.

13. Tür nach Anspruch 12, **dadurch gekennzeichnet, dass** der Hohlkörper (60) der Verkleidung den Haupthohlkörper der Tür hinsichtlich des Widerstands gegen Längsbeanspruchungen bildet.

## Claims

1. Composite lining (30) to form the internal skin of a vehicle side door in the region of the bottom of a recess (31), in the form of a first sheet comprising a substantially vertical principal part (30a) connected to an oblique upper return part (30b) toward the recess, produced in a molded plastic composite material, the lining (30) being made structural by a strip reinforcement (40) in the form of a second sheet comprising at least two parts (41, 42, 43) forming an angle relative to one another and fixed to the first sheet so as to form therewith a hollow body (60) providing resistance to longitudinal compressive forces, **characterized in that** the first sheet comprises, below the return part toward the recess (30b), a rib (32) in the shape of a rectilinear edge protruding from the external surface (38) of the principal vertical part (30a).

2. Lining as claimed in Claim 1, **characterized in that** the two parts (41, 42, 43) form an angle defining a rectilinear longitudinal edge (44).

3. Lining as claimed in Claim 1, **characterized in that** the strip reinforcement (40) comprises three planar parts (41, 42, 43) forming two rectilinear longitudinal edges (44) relative to one another.

4. Lining as claimed in any one of the preceding claims, **characterized in that** the second sheet is made of plastic composite material based on resin and reinforced fibers.

5. Lining as claimed in any one of the preceding claims, **characterized in that** the first and the second sheets are made of plastic composite material based on polyamide resin and glass fibers, at a rate of 40% to 70% by weight.

6. Lining as claimed in any one of Claims 1 to 5, **characterized in that** said rib (32) in the shape of a rectilinear edge is reinforced by partitions (33) in the form of angle plates formed between said rib and said external surface (38) of the principal vertical part (30a).

7. Lining as claimed in Claim 6, **characterized in that** said angle plates (33) are in the form of cross-pieces.

8. Lining as claimed in any one of Claims 1 to 7, **characterized in that** the rib (32) in the shape of an edge forms, after the assembly of the hollow body (60) defined by the lining (30) and the strip reinforcement (40), a transverse structural partition of said hollow body (60).

9. Lining as claimed in Claim 8, **characterized in that** the hollow body (60) is assembled by three welding or bonding lines (50, 51, 52) in the region of the upper and lower parts of the sheet forming the strip reinforcement (40) and in the region of the rib (32) in the shape of an edge.

10. Lining as claimed in any one of Claims 1 to 9, **characterized in that** the sheet forming the strip reinforcement (40) comprises, in the region of the rib (32) in the shape of an edge of the lining, a locating projection (45) cooperating with said rib (32).

11. Lining as claimed in Claim 10, **characterized in that** the locating projection (45) in turn consists of at least one rib.

12. Motor vehicle side door, of the type comprising a framework (10) defining a recess, and a composite lining (30) to form the internal skin of the door in the region of the bottom of a recess, **characterized in that** the lining (30) is in accordance with any one of Claims 1 to 11.

13. Door as claimed in Claim 12, **characterized in that** the hollow body (60) of the lining constitutes the principal hollow body of the door to resist longitudinal forces.
